# EUROPÄISCHE PATENTANMELDUNG

(11) **EP 4 851 077 A1**
(43) Veröffentlichungstag der Anmeldung: **09.12.2026**
(21) Anmeldenummer: 26176648.9
(22) Anmeldetag: 05.05.2026
(51) Int. Cl.: B65G 47/08, B65G 19/26, B65G 47/29, B65G 47/84

(54) **EINTEILER UND VERFAHREN ZUM EINTEILEN VON GETRÄNKEBEHÄLTERN**

(30) Priorität: 05.06.2025 DE 102025122164
(71) Anmelder: Krones Aktiengesellschaft, 93073 Neutraubling (DE)
(72) Erfinder: KROELL, Thorsten, 93073 Neutraubling (DE)
(74) Vertreter: Benninger, Johannes

(57) **Zusammenfassung**

Es ist ein Einteiler (1) für Getränkebehälter (7) offenbart. Der Einteiler (1) umfasst eine Fördereinrichtung (5), über welche Getränkebehälter (7) entlang einer horizontalen Transportebene bewegbar sind sowie mehrere Einteilfinger (3), welche derart umlaufend geführt sind, dass die mehrere Einteilfinger (3) hierbei aus der horizontalen Transportebene auftauchen, auf der Fördereinrichtung (5) angeordnete Getränkebehälter (7) kontaktieren und gegenüber weiteren Getränkebehälter beabstanden. Die Einteilfinger (3) sind derart ausgebildet, dass sie eine Ausweichbewegung ausführen, wenn sie bei einem Auftauchen aus der Transportebene auf eine Bodenfläche eines Getränkebehälters (7) treffen.

## Beschreibung

Die vorliegende Erfindung betrifft einen Einteiler und ein Verfahren zum Einteilen von Getränkebehältern.

Solche Vorrichtungen werden in Produktionsanlagen für Getränkebehälter eingesetzt. Die Getränkebehälter können sich beim Transport zwischen unterschiedlichen Behandlungsmaschinen in einem mehr oder weniger geschlossenen Getränkebehälterstrom befinden. Dieser muss, je nach Kapazität und Aufbau der Behandlungsmaschine, in unterschiedlich große Teilgruppen eingeteilt werden. Häufig ist es der Fall, dass Teilgruppen mit jeweils mehreren Getränkebehältern über einen Einteiler gebildet werden, wobei die Teilgruppen mit jeweils mehreren Getränkebehältern nachfolgend verpackt werden.

Einteiler besitzen mehrere umlaufend geführte Einteilfinger, welche unterhalb einer Transportebene der Getränkebehälter geführt sind. Hierbei können jeweils mehrere Einteilfinger an einer gemeinsamen Formatleiste angeordnet sein. An einer bestimmten Position tauchen diese Einteilfinger über die Transportebene auf, treten mit Getränkebehältern in Oberflächenkontakt und verzögern oder beschleunigen die Getränkebehälter dann gegenüber weiteren Getränkebehältern, um hierdurch die erwähnten Teilgruppen zu bilden.

Ein solcher Einteiler ist beispielsweise aus der DE 20 2015 104 636 U1 bereits bekannt.

Wenn Getränkebehälter zum Einteiler bewegt werden, stehen aufeinanderfolgende Getränkebehälter regelmäßig miteinander in Oberflächenkontakt. Sofern eine Geometrie von Getränkebehältern von einer erwarteten Soll-Geometrie abweicht oder sofern Getränkebehälter im Querschnitt asymmetrisch ausgebildet sind, kann es sein, dass ein Getränkebehälter sich nicht in einer erwarteten Soll-Position befindet, wenn er im Getränkebehälterstrom transportiert wird und über Einteilfinger kontaktiert werden soll. Wenn der jeweilige Einteilfinger hierzu aus der Transportebene auftaucht, kann es weiter sein, dass der jeweilige Getränkebehälter ungewollt über einen Einteilfinger umgekippt wird. Hierdurch muss ein fortlaufendes Bilden von Teilgruppen unterbrochen werden, bis der Getränkebehälter über einen Bediener wieder in eine aufrechte Orientierung überführt worden ist oder bis der umgekippte oder liegende Getränkebehälter von einem Bediener aus dem Einteiler entnommen worden ist. Solche Probleme führen daher zu ungewollten Stillstandszeiten des Einteilers, wodurch auch regelmäßig ein nachfolgender Verpackungsbetrieb unterbrochen werden muss.

Eine Aufgabe der Erfindung kann somit darin gesehen werden, auf einfache Art und Weise das Risiko von ungewollten Stillstandzeiten bei einem Bilden von Teilgruppen aus Getränkebehältern zu reduzieren.

Die Aufgabe wird mit den Gegenständen gelöst, welche die Merkmale in den unabhängigen Ansprüchen umfassen. Vorteilhafte Ausführungsformen werden durch die abhängigen Ansprüche beschrieben.

Die Erfindung betrifft einen Einteiler für Getränkebehälter, wobei es sich bei den Getränkebehältern insbesondere um Getränkeflaschen oder Getränkedosen handeln kann. Die Getränkeflaschen können in diversen Ausführungsformen durch PET-Getränkeflaschen ausgebildet sein.

Der Einteiler umfasst eine Fördereinrichtung, über welche Getränkebehälter entlang einer horizontalen Transportebene bewegbar sind. Die Fördereinrichtung kann ein umlaufend angetriebenes Transportband umfassen, welches eine Standfläche für Getränkebehälter ausbildet und welches insbesondere im Wesentlichen horizontal verläuft. Auch kann es sein, dass die Fördereinrichtung eine Gleitfläche ausgebildet, auf welcher Getränkebehälter aufstehen und entlang welcher Gleitfläche Getränkebehälter über die nachfolgend beschriebenen mehrere Einteilfinger des Einteilers geschoben werden. Denkbar ist auch, dass die Fördereinrichtung mehrere umlaufend angetriebene Transportbänder umfasst, welche unmittelbar aneinander anschließen, so dass Getränkebehälter während ihrer Bewegung von einem ersten Transportband auf mindestens ein weiteres Transportband übertreten.

Alternativ oder ergänzend hierzu kann es sein, dass die Fördereinrichtung zum Transport von Getränkebehältern, die hierbei aneinander anstehen, in mehreren parallelen Reihen ausgebildet ist.

Zudem umfasst der Einteiler mehrere Einteilfinger, welche derart umlaufend geführt sind, dass die mehrere Einteilfinger hierbei aus der horizontalen Transportebene auftauchen, auf der Fördereinrichtung angeordnete Getränkebehälter kontaktieren und gegenüber weiteren Getränkebehältern beabstanden. Die mehreren Einteilfinger können jeweils derart umlaufend geführt sein, dass ein jeweiliger Einteilfinger an einer bestimmten und entlang der horizontalen Transportebene angeordneten Position auftaucht, einen kontaktierten Getränkebehälter während seiner Bewegung über die Fördereinrichtung abschnittsweise begleitet und an einer bestimmten Position seinen Kontakt zum kontaktierten Getränkebehälter verliert, wobei der Einteilfinger hierbei unter die horizontale Transportebene abtaucht.

Der Einteiler kann eine Steuereinrichtung umfassen, welche mit der Fördereinrichtung und mindestens einem zur umlaufenden Bewegung der Einteilfinger vorgesehenen Antrieb in Verbindung steht. Die Steuereinrichtung kann zu einer solchen Ansteuerung der Fördereinrichtung und des mindestens einen Antriebes ausgebildet sein, dass eine Transportgeschwindigkeit der Fördereinrichtung gegenüber einer Bewegungsgeschwindigkeit der umlaufend geführten Einteilfinger vergrößert ausgebildet ist. Wenn ein Getränkebehälter seinen Kontakt zu einem Einteilfinger verliert, kann dieser Getränkebehälter gegenüber noch mit Einteilfingern in Kontakt stehenden Getränkebehältern beschleunigt werden, wodurch die bereits erwähnten Teilgruppen bzw. Getränkebehältergruppen ausgebildet werden.

Insbesondere ist denkbar, dass der Einteiler mehrere Einteilfinger umfasst, welche derart umlaufend geführt sind, dass die mehrere Einteilfinger hierbei aus der horizontalen Transportebene auftauchen, auf der Fördereinrichtung angeordnete Getränkebehälter kontaktieren und gegenüber weiteren Getränkebehältern beabstanden, indem die mehreren Einteilfinger die kontaktierten Getränkebehälter gegenüber einer Transportgeschwindigkeit der Fördereinrichtung temporär verzögern oder indem die mehrere Einteilfinger die kontaktierten Getränkebehälter gegenüber einer Transportgeschwindigkeit der Fördereinrichtung temporär beschleunigen.

Der Einteiler kann in bevorzugten Ausführungsformen mehrere Profilelemente umfassen, wobei an einem jeweiligen Profilelement jeweils mehrere Einteilfinger angeordnet sind und wobei die mehreren Profilelemente umlaufend geführt sind. Alternativ oder ergänzend hierzu kann eine Anzahl der Einteilfinger des Einteilers derart ausgebildet sein, dass ein jeweiliger zu kontaktierender Getränkebehälter mit mindestens zwei Einteilfingern oder mit genau zwei Einteilfingern in Kontakt tritt, wenn die mehreren Einteilfinger umlaufend geführt werden.

Die Einteilfinger sind derart ausgebildet, dass sie eine Ausweichbewegung ausführen, wenn sie bei einem Auftauchen aus der Transportebene auf eine Bodenfläche eines Getränkebehälters treffen. Hierdurch kann ein Risiko reduziert oder sogar ausgeschlossen werden, dass ein Getränkebehälter ungewollt kippt, wenn ein Einteiler bei einem Auftauchen aus der horizontalen Transportebene auf eine Bodenfläche eines Getränkebehälters trifft. Somit werden auf einfache Art und Weise Stillstandszeiten des Einteilers vermieden.

In besonders einfachen Ausführungsformen kann die Ausweichbewegung ausschließlich mechanisch realisiert werden. Hierbei kann es insbesondere sein, dass ein jeweiliger Einteilfinger, wie es nachfolgend noch beschrieben wird, im Rahmen der Ausweichbewegung eine Schwenkbewegung durchführt.

Es ist jedoch auch denkbar, dass die mehreren Einteilfinger oder ein Profilelement, an dem die mehreren Einteilfinger angeordnet sind, aktuatorisch bewegt werden, damit die mehreren Einteilfinger eine Ausweichbewegung ausführen können. Beispielsweise kann der Einteiler mindestens eine Sensorik und eine Steuereinrichtung umfassen, wobei die Steuereinrichtung über die mindestens eine Sensorik zum Erkennen von Ist-Positionen der Getränkebehälter ausgebildet ist, die sich hierbei auf der Fördereinrichtung befinden.

Weiter kann die Steuereinrichtung mit einem Aktuator in Verbindung stehen, welche via die Steuereinrichtung in Abstimmung auf die erkannten Ist-Positionen betätigt wird, so dass ein jeweiliger Einteilfinger eine Ausweichbewegung ausführt, wenn die Steuereinrichtung unter Berücksichtigung der erkannten Ist-Positionen feststellt, dass ein jeweiliger Einteilfinger bei einem Auftauchen aus der Transportebene auf eine Bodenfläche eines Getränkebehälters trifft. Denkbar ist hierbei insbesondere, dass
- eine Geschwindigkeit der umlaufenden Bewegung eines Einteilfingers oder mehrerer Einteilfinger geregelt wird, wenn die Steuereinrichtung unter Berücksichtigung der erkannten Ist-Positionen feststellt, dass ein jeweiliger Einteilfinger bei einem Auftauchen aus der Transportebene auf eine Bodenfläche eines Getränkebehälters trifft. Alternativ oder ergänzend hierzu kann es sein, dass
- ein Einteilfinger oder mehrerer Einteilfinger auf Veranlassung der Steuereinrichtung aktuatorisch bewegt und insbesondere aktuatorisch zurückgezogen und/oder aktuatorisch geschwenkt wird bzw. werden, wenn die Steuereinrichtung unter Berücksichtigung der erkannten Ist-Positionen feststellt, dass ein jeweiliger Einteilfinger bei einem Auftauchen aus der Transportebene auf eine Bodenfläche eines Getränkebehälters trifft.

Bewährt haben sich in der Praxis zudem Ausführungsformen, bei denen die mehreren Einteilfinger derart ausgebildet sind, dass sie eine jeweilige Ausweichbewegung mittels einer jeweiligen Schwenkbewegung ausführen. Insbesondere kann es hierbei sein, dass die mehreren Einteilfinger derart ausgebildet sind, dass die eine jeweilige Ausweichbewegung selbständig und rein mechanisch bzw. ohne aktuatorische Unterstützung mittels einer jeweiligen Schwenkbewegung ausführen, wenn sie bei einem Auftauchen aus der horizontalen Transportebene auf eine Bodenfläche eines Getränkebehälters treffen.

Die Praxis hat gezeigt, dass ein Einteilfinger durch eine mittels einer Schwenkbewegung durchgeführte Ausweichbewegung in eine Lücke gelangen kann, welche zwischen aufeinanderfolgenden Getränkebehältern ausgebildet ist. Hierdurch kann weiterhin gewährleistet werden, dass die Einteilfinger Teilgruppen bzw. Getränkebehältergruppen aus einem Getränkebehälterstrom bilden können, auch wenn ein Einteilfinger oder mehrere Einteilfinger auf eine Bodenfläche eines Getränkebehälters oder auf Bodenflächen mehrerer Getränkebehälter treffen.

Es ist somit denkbar, dass die mehreren Einteilfinger derart ausgebildet sind, dass sie eine jeweilige Ausweichbewegung mittels einer jeweiligen Schwenkbewegung solchermaßen ausführen, dass ein jeweiliger Einteilfinger hierdurch in eine Ausweichposition gelangt, in welcher sich der jeweilige Einteilfinger abschnittsweise oberhalb der horizontalen Transportebene befindet.

Die mehreren Einteilfinger können für eine jeweilige Schwenkbewegung jeweils mit einer Schwenkachse oder einem Drehgelenk in Verbindung stehen. Die jeweilige Schwenkachse kann bei dem Einteiler im Wesentlichen horizontal verlaufen. Alternativ oder ergänzend hierzu kann es sein, dass die mehreren Einteilfinger an ihrem unteren Ende jeweils mit einem Sockel in Verbindung stehen oder dass die mehrere Einteilfinger an ihrem unteren Ende jeweils einen Sockel ausbilden. Hierbei kann es sein, dass die jeweilige Schwenkachse durch den jeweiligen Sockel des jeweiligen Einteilfingers verläuft bzw. dass die jeweilige Schwenkachse im Sockel des jeweiligen Einteilfingers aufgenommen ist.

Es kann somit in diversen Ausführungsformen sein, dass eine Schwenkachse durch den Einteilfinger verläuft. Insbesondere kann es sein, dass eine Schwenkachse durch den Einteilfinger verläuft und zudem horizontal orientiert ist und/oder zudem senkrecht zu einer Förderrichtung der Fördereinrichtung verläuft.

Weiter kann es sein, dass den Einteilfingern Gegengewichte zugeordnet sind, über welche die Einteilfinger nach einer durchgeführten Ausweichbewegung in eine Grundposition selbständig zurückschwenkbar sind, in welcher Grundposition ein jeweiliger Einteilfinger eine im Wesentlichen aufrechte Orientierung besitzt. Sofern die Einteilfinger, wie vorhergehend bereits erwähnt, jeweils einen Sockel ausbilden oder jeweils mit einem Sockel in Verbindung stehen, kann es sein, dass das jeweilige Gegengewicht an dem Sockel angeordnet ist bzw. dass das jeweilige Gegengewicht mechanisch an den Sockel gekoppelt ist.

Alternativ oder ergänzend hierzu kann es sein, dass die mehrere Einteilfinger derart gelagert sind, dass sie bei einem definierten Schwenkwinkel zur Begrenzung der Schwenkbewegung an einer Basis anschlagen. Hierbei haben sich Ausführungsformen bewährt, bei denen sich der definierte Schwenkwinkel in einem Bereich befindet, der bei 5 Grad beginnt und bei 25 Grad endet. Insbesondere haben sich Ausführungsformen bewährt, bei denen der Schwenkwinkel in einer Größenordnung von etwa 15 bis 20 Grad liegt, wobei der Schwenkwinkel insbesondere im Wesentlichen bei 18 Grad betragen kann.

Wie vorhergehend bereits erwähnt, kann der Einteiler in bevorzugten Ausführungsformen mehrere Profilelemente umfassen, wobei an einem jeweiligen Profilelement jeweils mehrere Einteilfinger angeordnet sind und wobei die mehreren Profilelemente umlaufend geführt sind. Sofern eine Basis vorgesehen ist, an der ein jeweiliger Einteilfinger zur Begrenzung der Schwenkbewegung bei einem definierten Schwenkwinkel anschlägt, kann es sein, dass die Basis mit einem Profilelement korrespondiert, so dass die Basis auf ein Profilelement aufgeschoben werden kann.

Bewährt haben sich zudem Ausführungsformen, bei denen die Basis, das Gegengewicht und der Einteilfinger mechanisch zu einer Baugruppe zusammengefasst sind, so dass die Basis, das Gegengewicht und der Einteilfinger als Baugruppe gemeinsam von einem Profilelement des Einteilers abnehmbar und gemeinsam als Baugruppe am Profilelement festsetzbar sind.

Auch haben sich Ausführungsformen bewährt, bei denen die Einteilfinger im Bereich eines jeweiligen freien Endes eine konvexe Formgebung besitzen.

Weiter kann es sein, dass die mehreren Einteilfinger zum Ausführen der Ausweichbewegung jeweils teleskopierbar sind.

Die Erfindung betrifft zudem eine Verwendung eines Einteilers für Getränkebehälter, die im Querschnitt asymmetrisch sind. Wenn Getränkebehälter, die im Querschnitt asymmetrisch sind, entlang eines Getränkebehälterstroms transportiert werden, wobei aufeinanderfolgende Getränkebehälter miteinander in Oberflächenkontakt stehen, ist es regelmäßig der Fall, dass sich ein Getränkebehälter bei einer Kontaktierung über einen Einteilfinger nicht an einer erwarteten Soll-Position befindet. In Abhängigkeit von willkürlichen Drehorientierungen der Getränkebehälter des Getränkebehälterstroms kann es hierbei sein, dass eine für die Kontaktierung vorgesehene Ist-Position des Getränkebehälters gegenüber einer erwarteten Soll-Position in Förderrichtung oder entgegengesetzt zur Förderrichtung versetzt ist.

Wenn ein Einteilfinger über die Transportebene auftaucht, besteht bei Getränkebehältern mit asymmetrischem Querschnitt daher eine hohe Wahrscheinlichkeit, dass der Einteilfinger hierbei auf eine Bodenfläche des Getränkebehälters trifft, wodurch der Getränkebehälter ggf. kippen kann. Die Vorteile des Einteilers sind somit insbesondere dann vorhanden, wenn der Einteiler für Getränkebehälter, die im Querschnitt asymmetrisch sind, eingesetzt wird.

Die Erfindung betrifft zudem ein Verfahren zum Einteilen von Getränkebehältern in Getränkebehältergruppen. Merkmale, welche vorhergehend bereits zu diversen Ausführungsformen des Einteilers genannt wurden, können ebenso bei dem Verfahren vorgesehen sein und werden nicht mehrfach erwähnt. Ebenso können die nachfolgend zu diversen Ausführungsformen des Verfahrens beschriebenen Merkmale bei den vorhergehend bereits beschriebenen Ausführungsformen eines Einteilers vorgesehen sein, ohne erneut erwähnt zu werden. Der vorhergehend beschriebene Einteiler kann zum Durchführen der nachfolgend beschriebenen Ausführungsformen des Verfahrens ausgebildet sein. Die nachfolgend beschriebenen Ausführungsformen des Verfahrens können ggf. mittels der vorherig beschriebenen Ausführungsformen eines Einteilers durchgeführt werden.

Bei dem Verfahren werden Getränkebehälter hintereinander entlang mindestens einer Reihe über eine Fördereinrichtung bewegt, wobei im Bereich der Fördereinrichtung umlaufend geführte Einteilfinger von unterhalb einer Transportebene in Richtung nach oben bewegt werden, hierbei Getränkebehälter kontaktieren und die kontaktierten Getränkebehälter gegenüber nachfolgenden Getränkebehältern beschleunigen oder gegenüber vorauseilenden Getränkebehältern verzögern. Die Einteilfinger führen hierbei eine Ausweichbewegung aus, wenn sie bei einem Auftauchen aus der Transportebene auf eine Bodenfläche eines Getränkebehälters treffen.

Bewährt haben sich Ausführungsformen, bei denen ein jeweiliger Einteilfinger bei einer jeweiligen Ausweichbewegung um eine im Wesentlichen horizontal orientierte Achse geschwenkt wird. Die im Wesentlichen horizontal orientierte Achse kann hierbei senkrecht zu einer Förderrichtung verlaufen, entlang welcher die Getränkebehälter hintereinander entlang der mindestens einen Reihe über die Fördereinrichtung bewegt werden.

Es kann sein, dass die Getränkebehälter hintereinander entlang mindestens einer Reihe über eine Fördereinrichtung bewegt werden, wobei entlang einer Förderrichtung unmittelbar aufeinanderfolgende Getränkebehälter einer jeweiligen Reihe miteinander in Oberflächenkontakt stehen.

Weiter kann es sein, dass den Einteilfingern Gegengewichte zugeordnet sind, wobei ein jeweiliger Einteilfinger über das jeweilige Gegengewicht in eine Grundposition zurückgeschwenkt wird, nachdem er eine jeweilige Ausweichbewegung ausgeführt hat. Hierbei kann es sein, dass der Einteilfinger über das jeweilige Gegengewicht um die im Wesentlichen horizontal orientierte Achse, welche senkrecht zur Förderrichtung verläuft, entlang welcher die Getränkebehälter hintereinander entlang der mindestens einen Reihe über die Fördereinrichtung bewegt werden, in die Grundposition zurückgeschwenkt wird.

Vorstellbar ist auch, dass die Gegengewichte ein selbständiges Zurückschwenken eines jeweiligen Einteilfingers in die Grundposition dann bewirken, wenn ein dem Einteilfinger entlang einer Förderrichtung vorauseilender und über den Einteilfinger kontaktierter Getränkebehälter seinen Oberflächenkontakt zum Einteilfinger verliert.

Auch kann es sein, dass die jeweiligen Einteilfinger bei einem definierten Schwenkwinkel an einer Basis anschlagen, wodurch die Schwenkbewegung begrenzt wird. Bewährt haben sich hierbei Ausführungsformen, bei denen sich der definierte Schwenkwinkel in einem Bereich befindet, welcher bei 5 Grad beginnt und bei 25 Grad endet und welcher definierte Schwenkwinkel insbesondere zwischen 15 und 20 Grad, insbesondere im Wesentlichen 18 Grad beträgt.

Denkbar ist auch, dass ein jeweiliger Einteilfinger bei einer jeweiligen Ausweichbewegung teleskopiert wird.

Die Erfindung kann zudem ein System betreffen, wobei eine der vorhergehend beschriebenen Ausführungsformen eines Einteilers als Bestandteil des Systems ausgebildet sein kann. Das System kann zudem mindestens eine der nachfolgenden Stationen umfassen. Es ist vorstellbar, dass genau eine dieser Stationen vorgesehen ist.

In weiteren Ausführungsformen können mehrere der Stationen in beliebiger Kombination vorgesehen sein. Auch kann es sein, dass sämtliche der genannten Stationen vorgesehen sind:
- eine dem Einteiler in Strömungsrichtung vorgeordnete Füllmaschine zum Einbringen eines Getränks in die Getränkebehälter;
- eine dem Einteiler in Strömungsrichtung vorgeordnete Etikettierstation zum Aufbringen von Etiketten auf Getränkebehälter;
- eine dem Einteiler in Strömungsrichtung nachgeordnete Verpackungsstation zum Zusammenfassen mehrere Getränkebehälter über ein Verpackungsmittel zu einem Gebinde. Bei dem Verpackungsmittel kann es sich beispielsweise um eine Umreifung oder um eine Banderole handeln. Auch kann es sich bei dem Verpackungsmittel um einen flächigen Verpackungszuschnitt handeln, welcher Öffnungen besitzt, in welche Getränkebehälter eingesteckt sind, wenn sie über den flächigen Verpackungszuschnitt zu einem Gebinde zusammengefasst sind. Auch kann es sich bei dem Verpackungsmittel um thermoplastisches Verpackungsmaterial bzw. um thermoplastische Verpackungsfolie handeln;
- einen dem Einteiler in Strömungsrichtung nachgeordneten Schrumpftunnel zum Aufschrumpfen des thermoplastischen Verpackungsmaterials bzw. der thermoplastischen Verpackungsfolie auf jeweils mehrere Getränkebehälter;
- eine dem Einteiler und/oder der Verpackungsstation und/oder dem Schrumpftunnel in Strömungsrichtung nachgeordnete Gruppierstation, über die Getränkebehälter und/oder Gebinde in eine relative Ausrichtung zueinander überführbar sind, welche auf eine aus den Getränkebehältern und/oder Gebinden zu bildende palettierfähige Lage abgestimmt ist;
- Eine Lagenbildungseinrichtung, welche durch Zusammenschieben von Getränkebehältern und/oder Gebinden, die sich in der relativen Ausrichtung zueinander befinden, eine palettierfähige Lage bilden kann;
- eine Palettierstation zum Überführen und Absetzen von palettierfähigen Lagen aus Getränkebehältern auf einer zugeordneten Palette, wobei die Palettierstation der Lagenbildungseinrichtung in Strömungsrichtung nachgeordnet ist;
- einen Stretchwickler zum Umwickeln von palettierfähigen Lagen, die sich auf der Palette befinden, mit Stretchfolie.

Zwischen den einzelnen Stationen können sich zudem Transporteure befinden, welche Getränkebehälter, Getränkebehältergruppen bzw. Teilgruppen, Gebinde, Vorgruppierungen für eine zu bildende palettierfähige Lage und/oder palettierfähige Lagen in Strömungsrichtung fördern.

Der Einteiler kann eine Steuereinrichtung umfassen. Die Steuereinrichtung kann als SPS bzw. als speicherprogrammierbare Steuerung ausgebildet sein. Es kann sein, dass die Steuereinrichtung bzw. die SPS mit einer, mehreren oder sogar sämtlichen der vorher genannten Stationen in Verbindung steht und zur Ansteuerung der jeweiligen Station ausgebildet ist.

Eine mit der vorliegenden Patentanmeldung offenbarte Erfindung betrifft zudem eine Einteilerleiste, welche ein Profilelement sowie mindestens zwei am Profilelement angeordnete und zur Anlage an Getränkebehältern ausgebildete Einteilfinger umfasst. Die mindestens zwei Einteilfinger sind zum Durchführen einer Kippbewegung über wenigstens ein Gelenk mit dem Profilelement verbunden. Merkmale, welche vorhergehend zu diversen Ausführungsformen des Einteilers beschrieben wurden, können auch bei der Einteilerleiste vorgesehen sein. Die Einteilerleiste kann als Bestandteil der vorhergehend beschriebenen Ausführungsformen des Einteilers ausgebildet sein.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1A bis 1D zeigen in insgesamt vier schematischen Ansichten eine Ausführungsform eines erfindungsgemäßen Einteilers und verdeutlichen Schritte, wie sie in diversen Ausführungsformen des erfindungsgemäßen Verfahrens vorgesehen sein können.
Fig. 2 ist eine schematische Draufsicht auf die Ausführungsform des Einteilers gemäß Figuren 1A bis 1D.
Fig. 3 ist eine schematische Darstellung einer Ausführungsform eines Getränkebehälters, der über diverse Ausführungsformen eines Einteilers eingeteilt werden kann.
Figuren 4A bis 4D zeigen eine Ausführungsform eines Einteilfingers, wie er in diversen Ausführungsformen eines erfindungsgemäßen Einteilers und eines erfindungsgemäßen Verfahrens vorgesehen sein kann.
Fig. 5 zeigt eine Profilleiste mit mehrere hieran befestigten Einteilfingern, wie sie in diversen Ausführungsformen des erfindungsgemäßen Einteilers und des erfindungsgemäßen Verfahrens vorgesehen sein kann.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

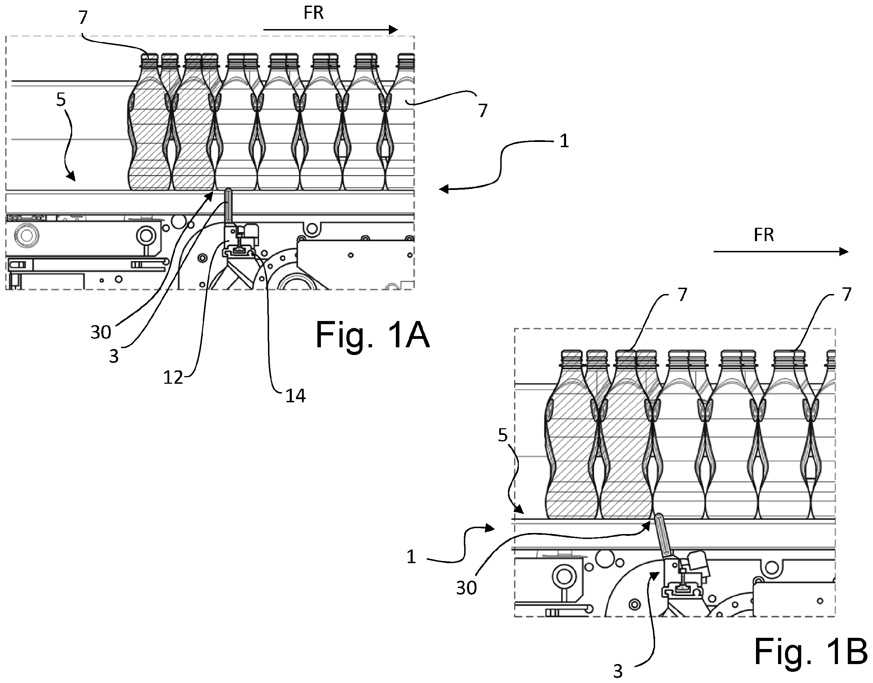

Die Figuren 1A bis 1D zeigen in insgesamt vier schematische Ansichten eine Ausführungsform eines erfindungsgemäßen Einteilers 1 und verdeutlichen Schritte, wie sie in diversen Ausführungsformen des erfindungsgemäßen Verfahrens vorgesehen sein können. Der Einteiler 1 ist in den Figuren 1A bis 1D nicht vollständig dargestellt, sondern lediglich anteilig abgebildet, und zwar jeweils in schematischen Seitenansichten.

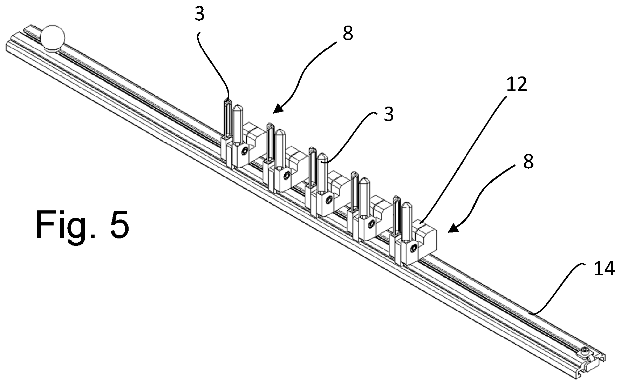

Die Fig. 1A zeigt einen Einteilfinger 3, der an einer Basis 12 gelagert ist, die an einem Profilelement 14 befestigt ist. Eine Ausführungsform einer solchen Basis 12 bzw. eines solchen Profilelementes 14 mit hieran gelagerten Einteilfingern 3 ist in der schematischen Darstellung nach Fig. 5 zu erkennen. Die in Fig. 5 dargestellte Ausführungsform kann Bestandteil des Einteilers 1 nach Figuren 1A bis 1D sein. In Bildrichtung hinter dem Einteilfinger 3, der in Fig. 1A dargestellt ist, befinden sich mehrere weitere Einteilfinger 3, die durch den Einteilfinger 3 verdeckt werden. Auch diese Einteilfinger 3 sind an demselben Profilelement 14 gehalten. Wenn das Profilelement 14 umlaufend bewegt wird, werden auch die Einteilfinger 3, die an dem Profilelement 14 angeordnet sind, umlaufend bewegt.

Über eine Fördereinrichtung 5 wird ein Getränkebehälterstrom entlang der Förderrichtung FR bewegt, wobei unmittelbar aufeinanderfolgende Getränkebehälter 7 des Getränkebehälterstroms miteinander in Oberflächenkontakt stehen. Die Fördereinrichtung 5 ist als Horizontalfördereinrichtung ausgebildet.

Mit dem Einteiler 1 können in Förderrichtung FR zueinander beabstandete Getränkebehältergruppen gebildet werden, von denen eine jeweilige Getränkebehältergruppe aus mehreren Getränkebehältern 7 besteht. Das Bilden von Getränkebehältergruppen ist in der Praxis häufig notwendig, um durch eine Verpackungsstation, welche auf den Einteiler 1 in Förderrichtung FR folgt, Verpackungsmaterialien aufzubringen oder Getränkebehälter 7 als Getränkebehältergruppe einer weiteren Handhabung zuzuführen.

Es kann beispielsweise sein, dass eine Getränkebehältergruppe über einen flächigen Verpackungszuschnitt zu einem Gebinde zusammengefasst wird. Bekannt sind beispielsweise Sechsergebinde, die genau sechs Getränkebehälter umfassen und über Verpackungsmaterial aneinandergehalten werden. Hierzu ist es notwendig, einzelne Getränkebehältergruppen zu bilden, auf welche sodann Verpackungsmaterial aufgebracht wird. Über den Einteiler 1 kann somit eine Getränkebehältergruppe, die eine bestimmte Anzahl an Getränkebehältern 7 umfasst, von einem Getränkebehälterstrom abgetrennt werden, wobei die Getränkebehälter 7 einer Getränkebehältergruppe nachfolgend einer weiteren Handhabung zugeführt werden.

Der Einteiler 1 ist in der Ausführungsform nach Figuren 1A bis 1D derart ausgebildet, dass dieser über Einteilfinger 3 mit Getränkebehältern 7 in Oberflächenkontakt tritt bzw. Getränkebehälter 7 kontaktiert und diese temporär gegenüber einer Transportgeschwindigkeit, mit welcher vorauseilende Getränkebehälter 7 bewegt werden, über einen gewissen Zeitraum verzögert. Die vorauseilenden Getränkebehälter 7 werden hierdurch gegenüber den nachfolgenden Getränkebehältern 7 mit höherer Transportgeschwindigkeit bewegt und gegenüber nachfolgenden Getränkebehältern 7 beabstandet. Hierdurch bilden die Getränkebehälter 7 durch die entsprechende Beabstandung eine Getränkebehältergruppe aus.

Um mit seitlichen Mantelflächen von Getränkebehältern 7 in Kontakt treten zu können, werden die Einteilfinger 3 zunächst unterhalb einer horizontalen Transportebene geführt, tauchen dann über die horizontale Transportebene auf und treten hierbei mit seitlichen Mantelflächen von Getränkebehältern 7 in Oberflächenkontakt. Die Fig. 1A zeigt eine Position des Einteilfingers 3, in welcher sich dieser befindet, kurz bevor er über die horizontale Transportebene auftaucht. Um Getränkebehälter 7 derart zu kontaktieren, dass über die Einteilfinger 3 Getränkebehälter 7 verzögert werden können, müssen die Einteilfinger 3 mit seitlichen Mantelflächen der Getränkebehälter 7 in Oberflächenkontakt gelangen. Bezugsziffer 30 deutet in Fig. 1A eine Lücke an, die zwischen aufeinanderfolgenden Getränkebehältern 7 ausgebildet ist. Zur Kontaktierung der seitlichen Mantelflächen muss der Einteilfinger 3 in diese Lücke 30 bewegt werden.

Wie es in Fig. 1A zu erkennen ist, befindet sich der Einteilfinger 3 unmittelbar vor dem Auftauchen über die horizontale Transportebene in einer Position, in welcher der Einteilfinger 3 in vertikaler Richtung nicht mit der Lücke 30 fluchtet, sondern gegenüber der Lücke 30 in Förderrichtung FR versetzt ist. Die Position des Einteilfingers 3 weicht daher von einer Soll-Position ab, in welcher sich der Einteilfinger 3 befinden sollte, bevor dieser über die horizontale Transportebene auftaucht. Sofer Getränkebehälter 7 beispielsweise im Querschnitt asymmetrisch sind, unterschiedliche Druckverhältnisse im Inneren besitzen oder sofern Querschnitte unterschiedlicher Getränkebehälter 7 stark voneinander abweichen, kann es sein, dass sich solche Abweichungen entlang der Förderrichtung FR aufsummieren, wodurch sich Getränkebehälter 7 sowie Lücken 30 nicht an erwarteten Soll-Positionen befinden.

Die Fig. 1A verdeutlicht, dass sich der Einteilfinger 3 dann unterhalb einer Bodenfläche eines Getränkebehälters 7 befinden kann bzw. dass der Einteilfinger 3 und eine Bodenfläche eines Getränkebehälters 7 in vertikaler Richtung miteinander fluchten. Bei Einteilern, die aus dem Stand der Technik bekannt sind, führt ein Auftauchen aus der Transportebene dann häufig dazu, dass ein Getränkebehälter 7 ungewollt kippt. Wenn dies der Fall ist, kann es notwendig sein, das Bilden von Getränkebehältergruppen zu unterbrechen, bis dieser Getränkebehälter 7 über einen Bediener wieder in eine aufrechte Orientierung überführt worden ist oder bis der umgekippte oder liegende Getränkebehälter von einem Bediener aus dem Einteiler entnommen worden ist. Solche Probleme führen zu ungewollten Stillstandszeiten eines Einteilers und ggf. einer notwendigen Unterbrechung eines Verpackungsbetriebes.

Bei dem Einteiler 1 der vorliegenden Erfindung und bei dem Einteiler 1 des Ausführungsbeispiels nach Figuren 1A bis 1D liegen solche Probleme nicht vor. Vorteilhafterweise kann der Einteiler 1 Getränkebehältergruppen bzw. Teilgruppen bilden, ohne dass hierbei Getränkebehälter 7 ungewollt kippen, wenn ein Einteilfinger 3 beim Auftauchen über die horizontale Transportebene auf eine Bodenfläche eines Getränkebehälters 7 trifft.

Wie es aus einer Zusammenschau der Figuren 1A und 1B deutlich wird, führt der Einteilfinger 3 eine Ausweichbewegung aus, wenn er beim Auftauchen aus der horizontalen Transportebene auf eine Bodenfläche eines Getränkebehälters 7 trifft. Hierdurch gelangt der Einteilfinger 3 in die Lücke 30 und kann dort mit einer seitlichen Mantelfläche eines Getränkebehälters 7 in Anlage stehen, um Getränkebehälter 7 gegenüber vorauseilenden Getränkebehältern 7 zu verzögern und Getränkebehältergruppen zu bilden. Auch ergibt es sich aus einer Zusammenschau der Figuren 1A und 1B, dass der Getränkebehälter 7, mit dessen Bodenfläche der Einteilfinger 3 beim Auftauchen in Oberflächenkontakt gelangt, nicht kippt und in seiner stehenden und aufrechten Orientierung verbleibt.

Bei der Ausführungsform nach Figuren 1A bis 1D führt der Einteilfinger 3 eine Ausweichbewegung durch, indem dieser um eine horizontal orientierte Achse geschwenkt wird. In weiteren Ausführungsformen kann es jedoch auch sein, dass der Einteilfinger 3 teleskopiert bzw. eingezogen wird, wenn er auf eine Bodenfläche eines jeweiligen Getränkebehälters 7 trifft. Auch eine Teleskopfunktion eines Einteilfingers 3 verhindert in der Praxis, dass ein Getränkebehälter 7 ungewollt kippt, wenn ein Einteilfinger 3 bei einem Auftauchen aus der Transportebene auf eine Bodenfläche trifft.

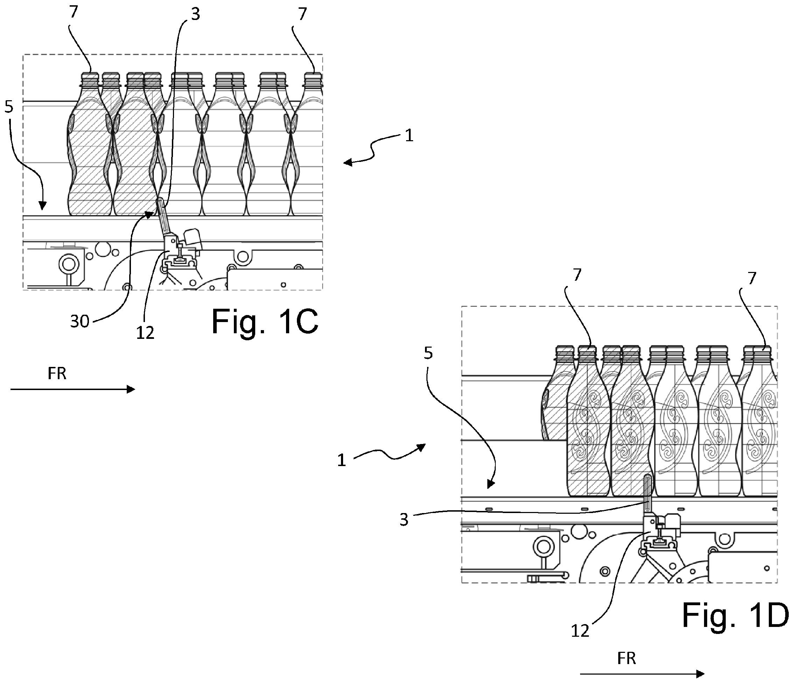

In Fig. 1C ist der Einteilfinger 3 bereits in der Lücke 30 angeordnet und steht in Oberflächenkontakt mit seitlichen Mantelflächen von Getränkebehältern 7. In dieser Orientierung wird der Einteilfinger 3 mit den Getränkebehältern 7 in Förderrichtung FR mitbewegt. Wenn ein in Figuren 1A bis 1D nicht mit dargestellter und dem Einteilfinger 3 in Förderrichtung FR vorauseilender weiterer Einteilfinger in Richtung nach unten aus der Transportebene abtaucht, verliert dieser Einteilfinger seinen Kontakt zu den Getränkebehältern 7. Da eine Bewegungsgeschwindigkeit sämtlicher Einteilfinger 3 gegenüber einer Transportgeschwindigkeit der Fördereinrichtung 5 reduziert ist, werden Getränkebehälter 7, die über den weiteren Einteilfinger aufgestaut wurden, beschleunigt, wenn der weitere Einteilfinger seine Kontaktierung zu den Getränkebehältern 7 verliert.

In der in Fig. 1D dargestellten Phase wurden die vorauseilenden Getränkebehälter 7 bereits beschleunigt und sind in der Darstellung nach Fig. 1D nicht mehr zu erkennen. Die Figuren 1C und 1D verdeutlichen jedoch, dass der Einteilfinger 3, der in Fig. 1C noch geschwenkt ist, selbständig in die Grundposition nach Fig. 1D zurückgeschwenkt wird, in welcher der Einteilfinger 3 eine aufrechte Orientierung besitzt bzw. in welcher eine Längsachse des Einteilfingers 3 im Wesentlichen vertikal orientiert ist. Vorteilhafterweise befindet sich der Getränkebehälter 7, mit welchem der Einteilfinger 3 in Fig. 1D noch in Kontakt steht, exakt an einer erwarteten Soll-Position, wenn auch dieser Einteilfinger 3 nach unten aus der Transportebene abtaucht und hierbei seinen Kontakt zum Getränkebehälter 7 verliert. Hierdurch können vorteilhafterweise Getränkebehältergruppen bzw. Teilgruppen, welche mittels des Einteilers 1 gebildet werden, exakt bzw. mit einer erwarteten Position an eine nachfolgende Station weitergeführt werden.

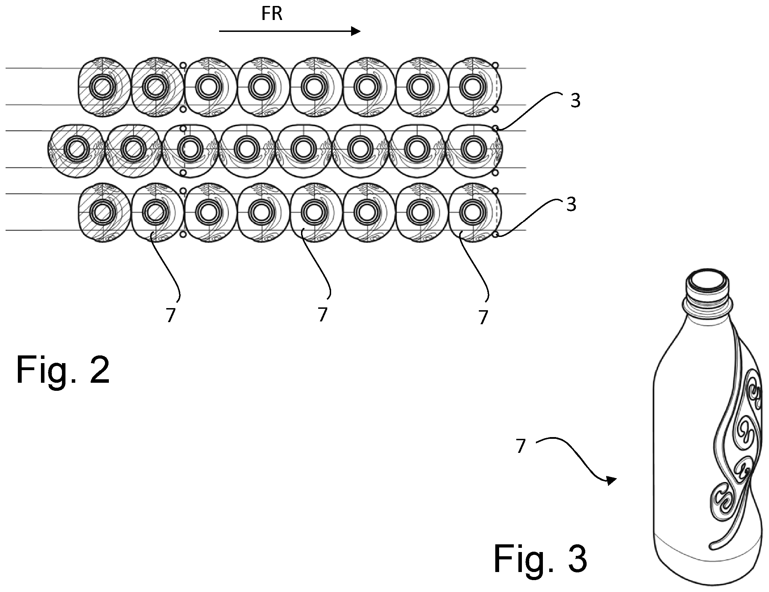

Die Fig. 2 ist eine schematische Draufsicht auf die Ausführungsform des Einteilers 1 aus Figuren 1A bis 1D, wobei Fig. 3 in perspektivischer Darstellung einen Getränkebehälter 7 zeigt, wie er von einem Einteiler 1 nach Figuren 1A bis 1D und Fig. 2 gehandhabt wird. die Figuren 2 und 3 zeigen hierbei, dass ein Getränkebehälter 7 abhängig von seiner Drehorientierung eine unterschiedliche Erstreckung entlang der Förderrichtung FR besitzt. Dies ist vorliegend deswegen der Fall, da der Getränkebehälter 7 im Querschnitt eine asymmetrische Formgebung besitzt. Im Bereich seines Außenumfangs ist der Getränkebehälter 7 hierbei in einem bestimmten Bereich plan oder im Wesentlichen plan ausgebildet. In einem weiteren Bereich seines Außenumfangs ist der Getränkebehälter 7 hingegen gewölbt und bildet eine Einschnürung aus.

Wenn solche Getränkebehälter 7 nun, wie dies aus der schematischen Draufsicht nach Fig. 2 deutlich wird, über einen Einteiler 1 entlang einer Förderrichtung FR bewegt werden und hierbei aneinander anstehen, so können keine sicheren Aussagen dahingehend getroffen werden, an welcher Position sich ein jeweiliger Getränkebehälter 7 im Verlauf seines Transportes befindet. Die jeweilige Position, an welcher sich ein Getränkebehälter 7 befindet, wenn ein Einteilfinger 3 aus der Transportebene auftaucht, ist abhängig von den Drehorientierungen der weiteren Getränkebehälter 7, die miteinander in Anlage stehen und zusammen mit diesem Getränkebehälter 7 als Reihe in Förderrichtung FR bewegt werden.

Der erfindungsgemäße Einteiler 1 und das Ausführungsbeispiel nach Figuren 1A bis 1D eignen sich daher insbesondere, um Getränkebehälter 7 ohne Probleme eines Kippens einzuteilen, welche Getränkebehälter 7 einen asymmetrischen Querschnitt besitzen bzw. welche Getränkebehälter 7 im Querschnitt asymmetrisch sind.

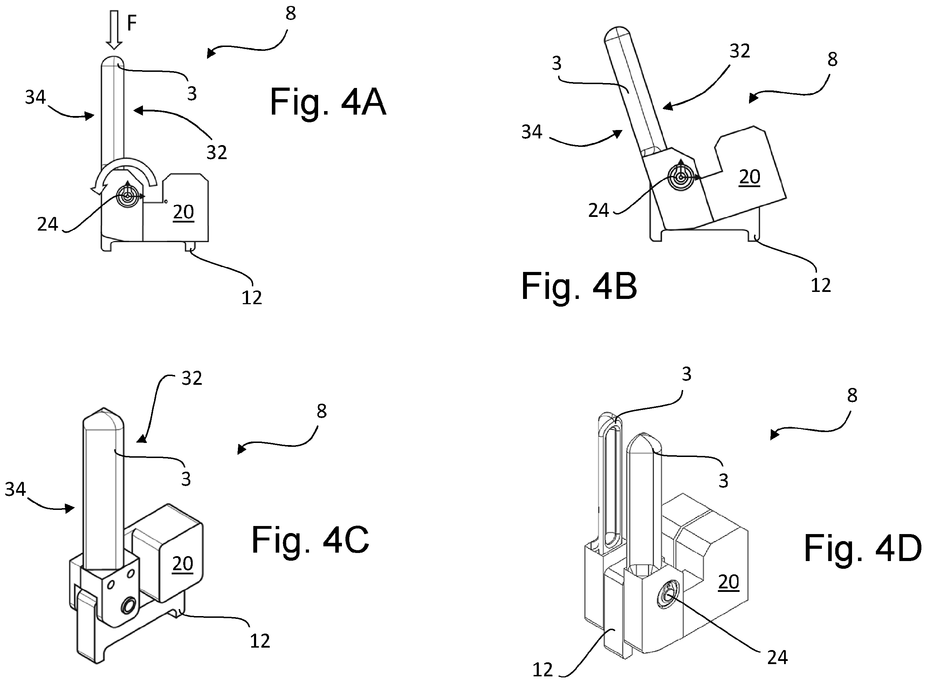

Die Figuren 4A bis 4D zeigen eine Ausführungsform eines Einteilfingers 3, wie er in diversen Ausführungsformen eines erfindungsgemäßen Einteilers 1 und eines erfindungsgemäßen Verfahrens vorgesehen sein kann. Darüber hinaus verdeutlichen die Figuren 4A bis 4D, dass der Einteifinger 3 als Bestandteil einer Bauteilgruppe 8 ausgebildet ist, welche darüber hinaus eine Basis 12, ein Gegengewicht 20 und eine Schwenkachse 24 umfasst. Der Einteilfinger 3, die Basis 12, das Gegengewicht 20 und die Schwenkachse 24 sind miteinander verbunden und können gemeinsam als Bauteilgruppe 8 an einem Profilelement 14 (vgl. Fig. 5) angeordnet und gemeinsam als Bauteilgruppe 8 von einem Profilelement 14 abgenommen werden.

Somit kann die gesamte Bauteilgruppe 8 vom Profilelement 14 abgenommen oder am Profilelement 14 angeordnet werden, ohne dass der Einteilfinger 3, die Basis 12, das Gegengewicht 20 und/oder die Schwenkachse 24 voneinander getrennt werden müssen. Solche Ausführungsformen ermöglichen eine einfache Anpassung des Einteilers 1 an unterschiedliche Arbeitsprozesse, indem beispielsweise die Anzahl der Einteilfinger 3 durch Anordnen oder Abnehmen einer gesamten Baugruppe 8 an bzw. von dem Profilelement 14 angepasst wird.

Die in Fig. 4A dargestellte Schwenkachse 24 ist im Wesentlichen horizontal orientiert, wenn der Einteilfinger 3 auf eine Bodenfläche eines Getränkebehälters 7 trifft. Eine Drehrichtung, entlang welcher der Einteilfinger 3 bewegt wird, wenn er während des Auftauchens aus der Transportebene auf eine Bodenfläche eines Getränkebehälters 7 trifft, ist in Fig. 4A mittels Pfeildarstellung angedeutet.

Eine weitere Pfeildarstellung F verweist auf eine Kraft, mit welcher ein Getränkebehälter 7 auf den Einteilfinger 3 einwirkt, wenn der Einteilfinger 3 während des Auftauchens auf die Bodenfläche trifft. Diese auf den Einteilfinger 3 einwirkende Kraft führt dazu, dass der Einteilfinger 3 schwenkt bzw. wegkippt, wodurch ein Risiko ausgeschlossen werden kann, dass ein Getränkebehälter 7 ungewollt kippt. Eine solche Schwenkbewegung wird aus einer Zusammenschau der Figuren 4A und 4B deutlich. Während sich der Einteilfinger 3 in Fig. 4A noch in einer aufrechten Orientierung oder Grundposition befindet, hat er in Fig. 4B bereits eine Ausweichbewegung durchgeführt und wurde hierbei unter Zuhilfenahme der Schwenkachse 24 drehend bewegt.

Während der Fortbewegung von Getränkebehältern 7 über die Fördereinrichtung 5 steht ein in Förderrichtung FR vorauseilender Getränkebehälter 7 mit einer vorderen Seite 32 des Einteilfingers 3 in Kontakt. Ein weiterer Getränkebehälter 7, welcher diesem Getränkebehälter 7 in Förderrichtung FR folgt, steht mit einer hinteren Seite 34 des Einteilfingers 3 in Kontakt. Um Getränkebehältergruppen zu bilden, wird zunächst derjenige Getränkebehälter 7, der mit der Vorderseite 32 des Einteilfingers 3 in Kontakt steht, in Förderrichtung FR beschleunigt und verliert hierbei seinen Kontakt zum Einteilfinger 3.

Hingegen bleibt der Kontakt zwischen der Rückseite 34 des Einteilfingers 3 und dem nachfolgenden Getränkebehälter 7 zunächst erhalten. Figuren 4B und 4C verdeutlichen, dass der bereits geschwenkte Einteilfinger 3 selbständig in seine Grundposition zurückschwenkt, wenn der in Förderrichtung vorauseilende Getränkebehälter 7 seinen Kontakt zur Vorderseite 32 des Einteilfingers 32 verliert. Um ein solches selbständiges Zurückschwenken zu bewirken, umfasst die Bauteilgruppe 8 das Gegengewicht 20, das mit dem Einteilfinger 3 verbunden ist.

In Fig. 4C hat der Einteilfinger 3 bereits seine Grundposition wieder eingenommen, wozu der Einteilfinger 3 ausgehend von der Position nach Fig. 4B aufgrund einer Masse des Gegengewichts 20 zurückgeschwenkt wurde. Die Fig. 4B zeigt zudem, dass die Schwenkbewegung für den Einteilfinger 3 begrenzt wird. Wenn der Einteilfinger 3 um einen vorgegebenen Winkel relativ zur Basis 12 geschwenkt wurde, schlägt der Einteilfinger 20 an die Basis 12 an. Ein Schwenkwinkel, um welchen der Einteilfinger 3 ausgehend von seiner Grundposition nach Fig. 4A geschwenkt werden kann, bis der Einteilfinger 3 an die Basis 12 anschlägt, kann zwischen 5 Grad und 25 Grad betragen. In diversen Ausführungsformen, die sich in der Praxis bewährt haben, kann der Schwenkwinkel vorzugsweise zwischen 15 und 20 Grad betragen. In einer besonders bevorzugten Ausführungsvariante beträgt der Schwenkwinkel im Wesentlichen 18 Grad. Ein solcher Schwenkwinkel ermöglicht ein sicheres Positionieren eines Einteifingers 3 in einer Lücke 30, wenn der Einteilfinger 3 beim Auftauchen aus der horizontalen Transportebene auf eine Bodenfläche eines Getränkebehälters trifft.

Die Fig. 4D zeigt eine weitere Ausführungsform einer Bauteilgruppe 8. Die Bauteilgruppe 8 umfasst bei der Ausführungsform nach Fig. 4D zwei Einteilfinger 3, die zur Kontaktierung eines gemeinsamen Getränkebehälters 7 vorgesehen sind. Eine solche Kontaktierung ist auch in der Draufsicht nach Fig. 2 zu erkennen. Den zwei Einteilfingern 3 ist eine gemeinsame Schwenkachse 24 zugeordnet, wobei die zwei Einteilfinger 3 jeweils drehfest mit der gemeinsamen Schwenkachse 24 gekoppelt sind und zusammen geschwenkt werden, wen die Einteilfinger 3 beim Auftauchen aus der Transportebene eine Bodenfläche eines Getränkebehälters 7 kontaktieren. Die freien Endbereiche der beiden Einteilfinger 3 besitzen wiederum eine konvex gewölbte Formgebung, wodurch eine Schwenkbewegung sicher eingeleitet werden kann, wenn die Einteilfinger 3 auf eine Bodenfläche treffen. Zudem wird durch die konvex gewölbte Formgebung im Bereich der freien Enden ein Risiko reduziert, dass Getränkebehälter 7 beschädigt und hierbei insbesondere verkratzt werden, wenn die Einteilfinger 3 auf eine Bodenfläche treffen.

Die Fig. 5 zeigt ein Profilelement 14 mit mehrere hieran befestigten Einteilfingern 3, wie sie in diversen Ausführungsformen des erfindungsgemäßen Einteilers 1 und des erfindungsgemäßen Verfahrens vorgesehen sein können. Die Bauteilgruppe 8, welche in Figuren 4A bis 4D gezeigt und beschrieben wurde, umfasst eine Basis 12. Die Basis 12 korrespondiert mit der Formgebung des Profilelementes 14, so dass die Basis 12 auf das Profilelement 14 aufgeschoben kann und durch eine Schiebebewegung entlang einer Längsachse des Profilelementes 14 vom Profilelement 14 wieder abgenommen werden kann. Hierdurch kann nein Einteiler 1 auf einfache Art und Weise an unterschiedliche Prozesse angepasst werden. Wenn der Einteiler 1 betrieben wird, wird das Profilelement 14 zusammen mit den hieran befestigten Einteilfingern 3 bzw. zusammen mit den hieran befestigten Baugruppen 8 umlaufend geführt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Einteiler
- 3: Einteilfinger
- 5: Fördereinrichtung
- 7: Getränkebehälter
- 8: Baugruppe
- 12: Basis
- 14: Profilelement
- 20: Gegengewicht
- 24: Schwenkachse
- 30: Lücke
- 32: Vorderseite (Einteilfinger 3)
- 34: Rückseite (Einteilfinger 3)

- FR: Förderrichtung

## Patentansprüche

1. Einteiler (1) für Getränkebehälter (7), umfassend
- eine Fördereinrichtung (5), über welche Getränkebehälter (7) entlang einer horizontalen Transportebene bewegbar sind, sowie
- mehrere Einteilfinger (3), welche derart umlaufend geführt sind, dass die mehreren Einteilfinger (3) hierbei aus der horizontalen Transportebene auftauchen, auf der Fördereinrichtung (5) angeordnete Getränkebehälter (7) kontaktieren und gegenüber weiteren Getränkebehältern (7) beabstanden, **dadurch gekennzeichnet, dass**
- die Einteilfinger (3) derart ausgebildet sind, dass sie eine Ausweichbewegung ausführen, wenn sie bei einem Auftauchen aus der Transportebene auf eine Bodenfläche eines Getränkebehälters (7) treffen.

2. Einteiler (1) nach Anspruch 1, bei dem die Einteilfinger (3) derart ausgebildet sind, dass sie eine jeweilige Ausweichbewegung mittels einer jeweiligen Schwenkbewegung ausführen.

3. Einteiler (1) nach Anspruch 2, bei dem eine Schwenkachse (24) durch den jeweiligen Einteilfinger (3) verläuft.

4. Einteiler (1) nach Anspruch 2 oder Anspruch 3, bei welchem den Einteilfingern (3) Gegengewichte (20) zugeordnet sind, über welche die Einteilfinger (3) nach einer durchgeführten Ausweichbewegung selbsttätig in eine Grundposition zurückschwenkbar sind, in welcher Grundposition ein jeweiliger Einteilfinger (3) eine im Wesentlichen aufrechte Orientierung besitzt.

5. Einteiler (1) nach einem der Ansprüche 2 bis 4, wobei die mehrere Einteilfinger (3) derart gelagert sind, dass sie bei einem definierten Schwenkwinkel zur Begrenzung der Schwenkbewegung an einer Basis (12) anschlagen.

6. Einteiler (1) nach Anspruch 5, bei welchem der definierte Schwenkwinkel sich in einem Bereich befindet, der bei 5 Grad beginnt und bei 25 Grad endet und welcher definierte Schwenkwinkel insbesondere zwischen 15 und 20 Grad, vorzugsweise im Wesentlichen 18 Grad beträgt.

7. Einteiler (1) nach Anspruch 5 oder Anspruch 6, bei dem die Basis (12), das Gegengewicht (20) und der Einteilfinger (3) mechanisch zu einer Baugruppe (8) zusammengefasst sind, so dass die Basis (12), das Gegengewicht (20) und der Einteilfinger (3) als Baugruppe (8) gemeinsam von einem Profilelement (14) des Einteilers (1) abnehmbar und gemeinsam als Baugruppe (8) am Profilelement (14) festsetzbar sind.

8. Einteiler (1) nach einem der voranstehenden Ansprüche, wobei die mehreren Einteilfinger (3) im Bereich eines jeweiligen freien Endes eine konvexe Formgebung besitzen.

9. Einteiler (1) nach einem der voranstehenden Ansprüche 1 bis 8, bei welchem die mehrere Einteilfinger (3) zum oder beim Ausführen der Ausweichbewegung jeweils teleskopierbar sind.

10. Verwendung eines Einteilers (1) gemäß einem der Ansprüche 1 bis 9 für Getränkebehälter (7), die im Querschnitt asymmetrisch ausgebildet sind.

11. Verfahren zum Einteilen von Getränkebehältern (7) in Getränkebehältergruppen, bei welchem Verfahren
- Getränkebehälter (7) hintereinander entlang mindestens einer Reihe über eine Fördereinrichtung (5) bewegt werden, wobei
- im Bereich der Fördereinrichtung (5) umlaufend geführte Einteilfinger (3) von unterhalb einer Transportebene in Richtung nach oben bewegt werden, hierbei Getränkebehälter (7) kontaktieren und die kontaktierten Getränkebehälter (7) gegenüber nachfolgenden Getränkebehältern (7) beschleunigen oder gegenüber vorauseilenden Getränkebehältern (7) verzögern, **dadurch gekennzeichnet, dass**
die Einteilfinger (3) eine Ausweichbewegung ausführen, wen sie bei einem Auftauchen aus der Transportebene auf eine Bodenfläche eines Getränkebehälters (7) treffen.

12. Verfahren nach Anspruch 11, bei dem ein jeweiliger Einteilfinger (3) bei einer jeweiligen Ausweichbewegung um eine im Wesentlichen horizontal orientierte Achse geschwenkt wird.

13. Verfahren nach Anspruch 11 oder Anspruch 12, bei welchem den Einteilfingern (3) Gegengewichte (20) zugeordnet sind, wobei ein jeweiliger Einteilfinger (3) über das jeweilige Gegengewicht (20) in eine Grundposition zurückgeschwenkt wird, nachdem er eine jeweilige Ausweichbewegung ausgeführt hat.

14. Verfahren nach Anspruch 13, bei dem die Gegengewichte (20) ein selbständiges Zurückschwenken eines jeweiligen Einteilfingers (3) in die Grundposition dann bewirken, wen ein dem Einteilfinger (3) entlang einer Förderrichtung (FR) vorauseilender und über den Einteilfinger (3) kontaktierter Getränkebehälter (7) seinen Oberflächenkontakt zum Einteilfinger (3) verliert.

15. Verfahren nach einem der Ansprüche 12 bis 14, bei welchem die jeweiligen Einteilfinger (3) bei einem definierten Schwenkwinkel an einer Basis (12) anschlagen, wodurch die Schwenkbewegung begrenzt wird, wobei sich der definierte Schwenkwinkel in einem Bereich befindet, welcher bei 5 Grad beginnt und bei 25 Grad endet, wobei der definierte Schwenkwinkel insbesondere zwischen 15 und 20 Grad und vorzugsweise im Wesentlichen 18 Grad beträgt.

16. Verfahren nach einem der Ansprüche 11 bis 15, bei dem ein jeweiliger Einteilfinger (3) bei einer jeweiligen Ausweichbewegung teleskopiert wird.
